# EUROPÄISCHE PATENTSCHRIFT

(11) **EP 0 968 789 B1**
(45) Veröffentlichungstag und Bekanntmachung des Hinweises auf die Patenterteilung: **04.08.2004**
(21) Anmeldenummer: 99112243.3
(22) Anmeldetag: 25.06.1999
(51) Int. Cl.: B23Q 3/18, B23H 7/26, F16D 1/076, F16D 11/14, F16D 1/10, F16B 21/16, B23Q 1/00, B23B 29/04, B23B 31/26

(54) **Kupplungsvorrichtung**
Clutch mechanism
Dispositif d'embreyage

(30) Priorität: 04.07.1998 DE 19829955
(43) Veröffentlichungstag der Anmeldung: 05.01.2000
(73) Patentinhaber: System 3R International AB, 162 50 Vällingby (SE)
(72) Erfinder: Schill, Albrecht Paul, 165 70 Stockholm (SE)
(74) Vertreter: Zinngrebe, Horst, Dr.rer.nat.

(56) Entgegenhaltungen:
- EP-A- 0 490 030
- DE-A- 3 322 861
- DE-A- 3 926 631
- PATENT ABSTRACTS OF JAPAN vol. 016, no. 510 (M-1328), 21. Oktober 1992 (1992-10-21) & JP 04 189402 A (SEIBU ELECTRIC & MACH CO LTD), 7. Juli 1992 (1992-07-07)

## Beschreibung

Die Erfindung betrifft eine Kupplungsvorrichtung nach dem Oberbegriff des Patentanspruches 1.

Bei der aus der Schrift EP-A-255042 bekannten Kupplungsvorrichtung ist der Zuganker an seinem dem Kopf gegenüberliegenden Ende mit dem zweiten Kupplungsorgan durch eine Bajonett-Verriegelung koppelbar. Ferner sind Spannmittel vorhanden, die auf den Kopf des Zugankers relativ zum ersten Kupplungsorgan zum Verspannen der beiden Kupplungsorgane einwirken. In anderen Fällen, bei denen am zweiten Kupplungsorgan zur Ausbildung der Bajonett-Verriegelung wenig Platz vorhanden ist, kann das genannte Ende des Zugankers mit dem zweiten Kupplungsorgan fest verschraubt werden, in dem ein an dem Ende ausgebildetes Gewinde in ein am zweiten Kupplungsorgan vorgesehenes Gegengewinde eingreift.

Die eingangs genannten Kupplungsvorrichtungen sind am Bearbeitungskopf einer Werkzeugmaschine, also etwa einer Drehbank oder einer Erodiermaschine, angebracht und dienen dazu, ein zu bearbeitendes Werkstück in räumlich eindeutig definierter Position an den Bearbeitungskopf anzuspannen. Das zweite Kupplungsorgan kann entweder das Werkstück selbst oder ein Werkstückträger sein, an welchem das Werkstück befestigt ist. Fluchtende Durchgangsbohrungen durch den Zuganker und das zweite Kupplungsorgan dienen dabei zum Durchleiten von Spülflüssigkeit an die Bearbeitungsstelle.

Die Spannmittel sind üblicherweise im Bearbeitungskopf, mit welchem das erste Kupplungsorgan fest verbunden ist, untergebracht und umfassen in den meisten Fällen ein Kugelgesperre, dessen radial beschränkt bewegliche und in Umfangsrichtung verteilte Kugeln nach dem Einführen des Zugankers in den Bearbeitungskopf dessen Kopf radial ergreifen.

Beim axialen Anspannen des zweiten Kupplungsorgans an das erste treten mitunter Querkräfte auf, die sich bei der angestrebten Positioniergenauigkeit in der Größenordnung von einem oder wenigen µm vor allem dann störend bemerkbar machen, wenn die axiale Länge des Zugankers relativ klein ist und daher für die Bajonett-Verriegelung kein ausreichender Raum zur Verfügung steht

Der Erfindung liegt daher die Aufgabe zugrunde, bei der eingangs genannten Kupplungsvorrichtung Maßnahmen vorzusehen, die den Einfluß von Querkräften auf die Positionierung des zweiten Kupplungsorgans minimieren.

Dazu ist erfindungsgemäß vorgesehen, daß der Zuganker zum Durchgreifen durch das zweite Kupplungsorgan einen Schaft aufweist, dessen Durchmesser kleiner als die lichte Weite der Durchgangsbohrung ist und der am Ende um mehr als die lichte Weite radial verbreitert ist. Damit wird vermieden, daß beispielsweise von den Spannmitten ausgehende Querkräfte die axiale und winkelmäßige Positionierung des zweiten Kupplungsorgans störend beeinflussen können. Beispielsweise erlaubt das Radialspiel ein leichtes seitlichen Ausweichen des Zugankers aus der Mitten-Achse (Z-Achse), so daß die dieses Ausweichen bewirkenden Querkräfte ohne Einfluß auf das Anspannen bleiben.

Es erweist sich als vorteilhaft, wenn die Durchgangsbohrung unter Ausbildung einer Ringschulter zur Aufnahme des verbreiterten Endes aufgebohrt ist. Ferner ist es zweckmäßig, das verbreiterte Ende als separaten Stopfen auszubilden, der mit dem Schaft verbunden, beispielsweise verschraubt werden kann.

Obwohl es für die Zwecke der Erfindung ausreicht, wenn die Ringschulter des zweiten Kupplungsorgans und die zugehörige Anlagefläche am Stopfen sich quer zur Mitten-Achse erstrecken, wird eine durchgehend flächige Anlage des Stopfens an die Schulter dann erreicht, wenn in Weiterbildung der Erfindung sowohl die Ringschulter wie auch die Anlagefläche gewölbt oder ballig ausgebildet sind, wobei der Krümmungsmittelpunkt der Balligkeit beider Flächenaußerhalb des Zugankers aufder Mitten-Achse liegt.

In besonders zweckmäßiger Ausgestaltung der Erfindung sind sowohl die Umfangsfläche des Stopfens wie auch die ihr gegenüber liegende Innenkontur der Aufbohrung gleichartig unrund ausgeführt, so daß sich eine Verdrehsicherung zwischen Stopfen und zweitem Kupplungsorgan ergibt.

Weiterhin empfiehlt es sich, zwischen dem Kopf des Zugankers und dessen Ende eine Buchse einzufügen, welche von dem Schaft mit Radialspiel durchsetzt ist. Damit wird die Führung des Zugankers in den Spannmitteln verbessert. Ist die Buchse mit einer radialen Ringdichtung versehen, dient sie auch zur Absperrung des die Spannmittel betätigenden Druckmediums. Ferner empfiehlt es sich, an der freien Stirnfläche der Buchse wenigstens ein sich axial erstreckendes Formteil, etwa nach Art einer vorstehenden Nase oder einer nutenförmigen Einsenkung, vorzusehen, weiches sein Gegen-Formteil in der freien Stirnfläche des zweiten Kupplungsorgans findet und eine drehsichere Anlage des zweiten Kupplungsorgans an die Buchse gewährleistet.

Um die radiale Beweglichkeit des Zugankers relativ zum zweiten Kupplungsorgan insbesondere dann zu sichern, wenn an dem zweiten Kupplungsorgan eine Elektrode befestigt wird, empfiehlt es sich in Weiterbildung der Erfindung ferner, die elektrodenseitige Öffnung der Durchgangsbohrung wenigstens vorübergehend durch einen Deckel abzuschließen, der zweckmäßig in eine Einsenkung am zweiten Kupplungsorgan eingeklemmt werden kann.

Im übrigen sind bevorzugte Ausgestaltungen der Erfindung in den Unteransprüchen angegeben.

Die Erfindung wird nachstehend anhand des in der beigefügten Zeichnung dargestellten Ausführungsbeispiels im einzelnen beschrieben. Es zeigen:
- Fig. 1: einen Axialschnitt durch eine mit den Merkmalen der Erfindung ausgerüstete Kupplungsvorrichtung mit angespanntem zweiten Kupplungsorgan;
- Fig. 2: eine vergrößerte Detaildarstellung eines Ausschnittes aus der Vorrichtung nach Fig. 1;
- Fig. 3: eine perspektivische Ansicht eines Stopfens von oben;
- Fig. 4: eine perspektivische Ansicht des zweiten Kupplungsorgans von unten;
- Fig. 5: eine vergrößerte Detaildarstellung ähnlich Fig. 2 von einer Modifikation der Vorrichtung nach Fig. 1;
- Fig. 6: eine schematische perspektivische Ansicht einer weiteren Modifikation des zweiten Kupplungsorgans;
- Fig. 7: die Ansicht eines Deckels; und
- Fig. 8: eine schematische perspektivische Ansicht des abgedeckten zweiten Kupplungsorgans gemäß Fig. 6.

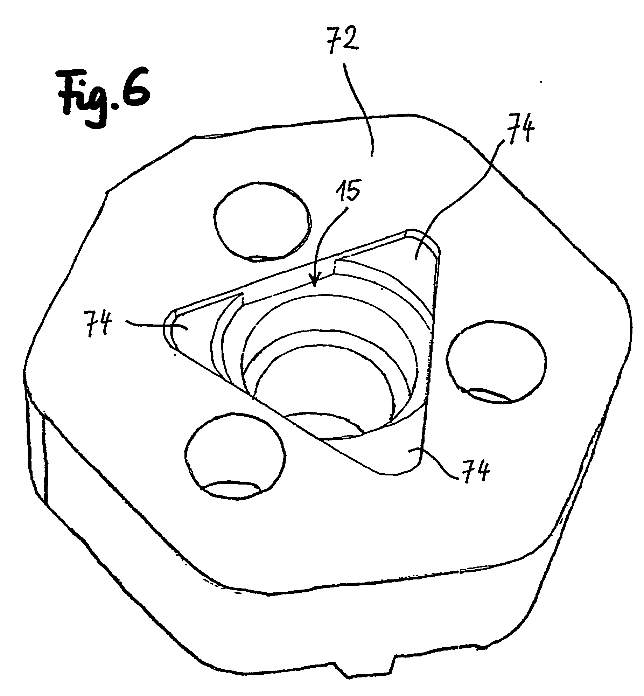

Die Kupplungsvorrichtung wird nachfolgend im Zusammenhang mit dem Bearbeitungskopf 30 einer nicht dargestellten Erodiermaschine beschrieben, obgleich die beanspruchte und nachfolgend beschriebene Kupplungsvorrichtung auch für andere Werkzeugmaschinen eingesetzt werden kann. Der Bearbeitungskopf 30 ist in seinem grundsätzlichen Aufbau und seiner Wirkungsweise in dem Dokument EP-A-0255042, dort insbesondere in Fig. 6 mit zugehöriger Beschreibung, erläutert, so daß auf diese Schrift ausdrücklich Bezug genommen werden kann.

Danach besteht der Bearbeitungskopf 30 aus einem oberen topfartigen Gehäuseteil 18, in welches ein zentrales Rohrstück 32 eingesetzt und von einer mit dem oberen Gehäuseteil 18 verschraubten Platte 34 gehalten ist. Gehäuseteil 18 und Platte 34 umschließen eine Ringkammer um das Rohrstück 32 herum, in welcher ein Ringkolben 36 durch mehrere sich an der Platte abstützende Federn 38 (nur eine Feder ist dargestellt) axial verschiebbar ist. Das Gehäuseteil 18 sowie die Platte 34 durchsetzen in die Ringkammer mündende Druckluftkanäle 31, 33, die nach Beaufschlagung mittels von einer äußeren nicht dargestellten Druckluftquelle stammenden Druckluft eine Bewegung des Ringkolbens 36 gegen die Wirkung der Feder 38 bewirken und andere Funktionen erfüllen. Die dem Rohrstück 32 zugewandte Fläche des Ringkolbens 36 weist eine axial abgestufte radiale Ausnehmung 35 auf, in welche Kugeln eines Kugelgesperres bei entsprechender Stellung des Ringkolbens 36 eindringen können. Dargestellt sind die Kugeln 4, 37 des Kugelgesperres. Die in Umfangsrichtung gleichverteilten Kugeln sitzen radial beweglich in Durchbrüchen des Rohrstücks 32, die aufgrund ihrer Gestaltung ein Heraustreten der Kugeln 4, 37 in den Innenkanal des Rohrstücks 32 über ein bestimmtes Ausmaß hinaus verhindern. Der nach oben und unten offene Innenkanal des Rohrstückes 32 fluchtet mit einer axialen Mittelbohrung 39 des Gehäuseteils 18 und besitzt eine Mittellinie 24, die für die Positionierung des zweiten Kupplungsorgans am ersten Kupplungsorgan die z-Achse bildet.

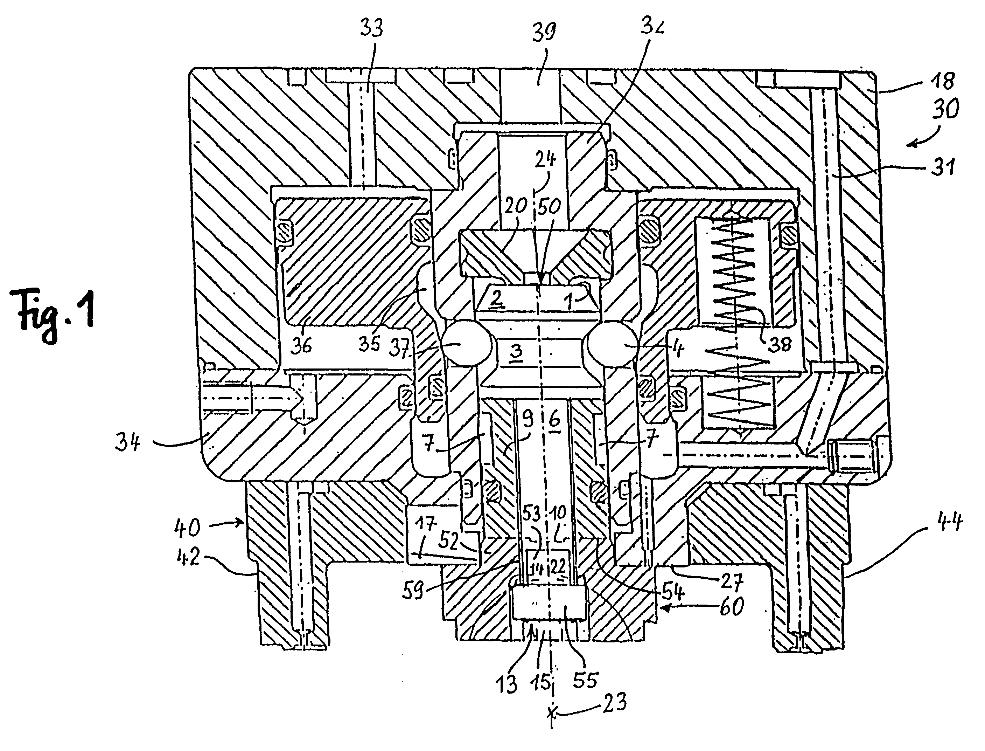

An der unteren Außenseite der Platte 34 ist ein erstes Kupplungsorgan 40 befestigt, welches mehrere in Umfangsrichtung gleichverteilte nach unten vorstehende Abstandspfosten trägt, von denen die Abstandspfosten 42, 44 dargestellt sind. Radial innerhalb der Abstandpfosten 42, 44 weist das erste Kupplungsorgan 40 Referenzelemente 17, 27 auf, für deren Gestaltung ein Beispiel in der Schrift EP-A-722809, Fig. 1 gegeben ist, wobei die hier genannten Referenzelemente 17, 27 dort die Bezugszeichen 19, 10 tragen. Die Referenzelemente 17, 27 umgeben kreisförmig die zentrale Öffnung des Rohrstücks 32.

Ein im ganzen mit 50 bezeichneter Zuganker weist einen Kopf 2 auf, an den sich ein am Ende mit Innengewinde versehener Schaft 6 anschließt. Der an den Kopf 2 anschließende Abschnitt des Schaftes 6 ist von einer Buchse 9 umgeben. Der Kopf 2 und der Schaft 6 bestehen aus einem Stück und der Kopf 2 liegt mit seiner oberen freien Stirnfläche 1 gegen ein Dichtelement 20 an, welches in einer radialen Erweiterung des erwähnten Innenkanals angeordnet ist und eine zentrale Öffnung aufweist. In den Figuren nicht dargestellt ist eine axiale Durchbohrung des Zugankers 50, die mit der Öffnung in dem Dichtelement 20 fluchtet und dazu dient, durch die Öffnung 39 einströmende Spülflüssigkeit durchzuleiten. Der Kopf 2 weist eine doppelt konische Eindrehung 3 auf, die sich dann, wenn, wie in Fig. 1 dargestellt, der Zuganker 50 in den Innenkanal des Rohrstücks 32 eingesetzt ist und die Stirnfläche 1 an dem Dichtelement 20 anliegt, in Höhe des Kugelgesperres befindet. Ist der Ringkolben 36 gemäß Fig. 1 in der Nähe seiner oberen Endlage, sind die Kugeln 4, 37 des Kugelgesperres in die Eindrehung 3 eingedrückt und halten damit den Zuganker 50 in axialer Richtung fest.

Die radiale Außenabmessung der Buchse 9 steht über diejenige des Kopfes 2 nicht vor. Am Umfang der Buchse 9 sind gegenüberliegende Abflachungen 7 ausgebildet, die es ermöglichen, den Zuganker 50 mit an ihm befestigtem zweiten Kupplungsorgan 60 beispielsweise in ein Werkzeugmagazin abzuhängen, wobei dann Greifer des Magazins in die Abflachungen 7 eingreifen. Im übrigen liegt die Buchse 9 an der Innenfläche des Innenkanals an und dichtet diesen nach außen mit einer Ringdichtung 19 ab. Der Schaft 6 ist in seinem Außendurchmesser etwas kleiner als die lichte Weite der Buchse 9, so daß zwischen Schaft 6 und Buchse 9 ein radiales Spiel verbleibt. Das freie Ende des Schaftes 6 trägt ein Innengewinde, in welches der mit Außengewinde versehene Hals 53 eines axial durchbohrten Stopfens 13 eingeschraubt ist. Der relativ zum Hals 53 radial verbreiterte Stopfenkopf 55 unterfaßt mit seiner oberen Anlagefläche 22 eine Ringschulter 14, welche durch eine untere radiale Aufbohrung 15 einer axialen Durchgangsbohrung 59 des zweiten Kupplungsorgans 60 ausgebildet ist.

Das zweite Kupplungsorgan 60 ist zunächst mit nicht näher bezeichneten Gegenreferenzelementen an seiner Oberseite versehen, die ähnlich ausgebildet sind, wie die Gegenreferenzelemente 44, 58 aus der Schrift EP-A-722809. Das zweite Kupplungsorgan 60 besitzt einen zentralen erhabenen Ansatz 52, dessen im wesentlichen plane Stirnfläche 54 an der im wesentlichen ebenfalls planen Unterseite der Buchse 9 flächig anliegt. Die Oberseite der Buchse 9 liegt an der Unterseite des Kopfes 2 an.

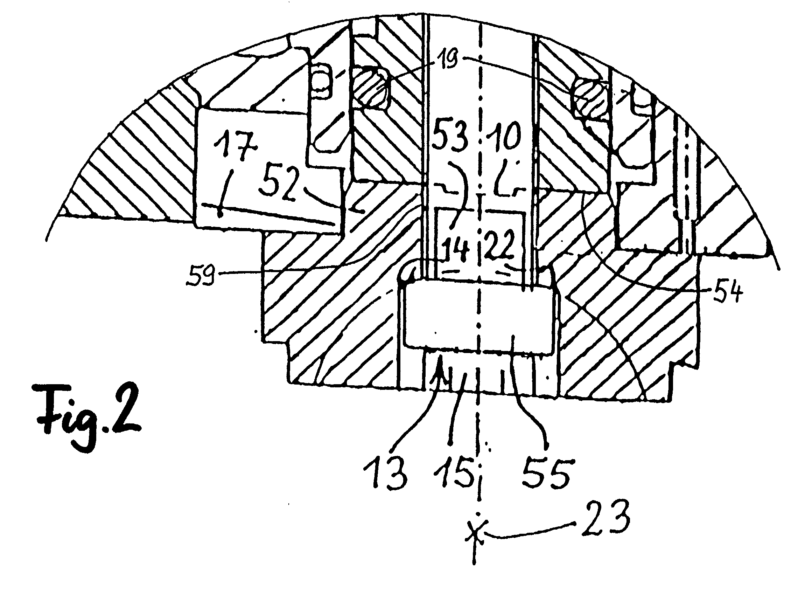

Wie in Fig. 2 gestrichelt dargestellt weist die Stirnfläche 54 eine axiale Profilierung in Form einer Einsenkung auf, in welche eine entsprechend geformte aus der Unterseite der Buchse 9 vorstehende Nase 10 eingreift. Bei der dargestellten Verbindung zwischen zweitem Kupplungsorgan 60 und Zuganker 50 ist daher das zweite Kupplungsorgan 60 drehfest relativ zum Zuganker 50.

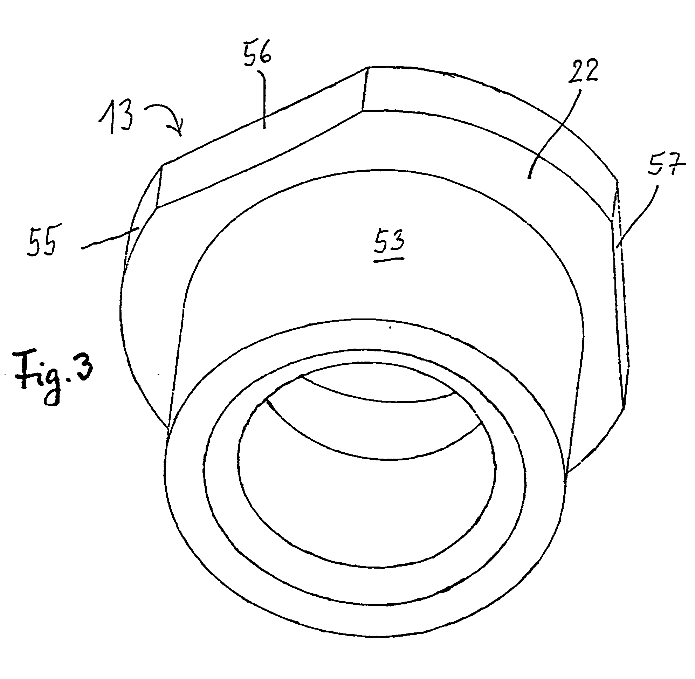

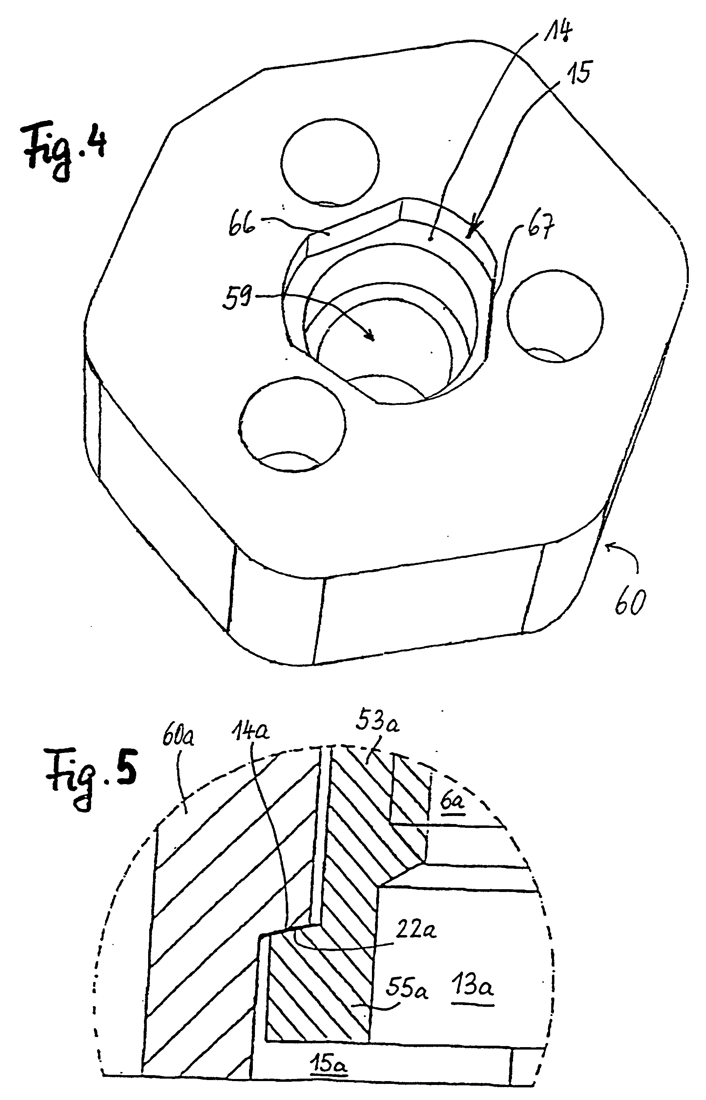

Der Stopfenkopf 55 ist in Umfangsrichtigung unrund, und die Aufbohrung 15 ist in ihrem unteren, den Stopfenkopf 55 aufnehmenden Abschnitt in entsprechender Weise unrund geformt. Im dargestellten Ausführungsbeispiel weist der gegenüber dem zylindrischen Hals 53 radial verbreitete Stopfenkopf 55 am Umfang Abflachungen 56, 57 auf, die entsprechenden Abflachungen 66, 67 an der Innenfläche der Aufbohrung 15 entsprechen (Fig. 3, 4). Insgesamt ist der Stopfenkopf 55 in seiner radialen Erstreckung kleiner als die Aufbohrung 15 der Durchgangsbohrung 59 im zweiten Kupplungsorgan 60, so daß der Stopfen 13 radial innerhalb der Aufbohrung 15 des zweiten Kupplungsorgans 60 beweglich ist.

Beim Kuppeln der beiden Kupplungsorgane wird das zweite Kupplungsorgan 60 mit seinen Referenzgegenelementen gegen die Referenzelemente 17, 27 des ersten Kupplungsorgangs 40 angespannt mit einer Spannkraft, die sich aus der Druckkraft der Feder 38 und gegebenenfalls einer Unterstützung durch Druckluft über die den Kopf 3 unterfassenden Kugeln 4, 37 zusammensetzt. Wenn die Kugeln 4, 37 des Kugelgesperres den Kopf 3 derart unterfassen, daß der Mittelpunkt ihrer Krafteinwirkung auf der Achse 24 liegt, wird auf den Zuganker 50 nur eine axial gerichtete Zugkraft ausgeübt, die unmittelbar auf das zweite Kupplungsorgan 60 übertragen wird.

Häufig kommt es jedoch vor, daß das Zentrum der von den Kugeln 4, 37 des Kugelgesperres ausgehenden Krafteinwirkung auf den Zuganker 50 nicht auf sondern neben der Achse 24 liegt. In diesem Fall wird der Kopf 2 etwas gegen die Mittellinie 24 verkippt oder verschoben mit der Folge, daß dann, wenn das erwähnte Radialspiel nicht vorhanden wäre, auf das zweite Kupplungsorgan 60 zusätzlich zur Axialkomponente der Spannkraft auch eine Kraftkomponente ausgeübt werden würde, die quer zur Achse 24 weist. Diese Querkomponente kann von Bearbeitungskopf zu Bearbeitungskopf unterschiedlich sein und beeinflußt die axiale und winkelmäßige Positionierung des zweiten Kupplungsorgans 60 relativ zum ersten Kupplungsorgan 40 vor allem dann merkbar, wenn das zweite Kupplungsorgan 60 wie dargestellt in radialer Richtung relativ klein und die Gesamtlänge des Zugankers 50 relativ kurz sind. Das vorgesehene Radialspiel sichert daher eine freie Verkanntungsmöglichkeit des Kopfes 2 mit Schaft 6 und Stopfen 13 innerhalb der Buchse 9 sowie der Durchgangsbohrung 59 und der Aufbohrung 15. Wenn die Ebene der Ringschulter 14 und der Ringfläche 22 sich quer zur Achse 24 erstrecken, fuhren die genannten Verhältnisse dazu, daß beide Flächen nicht mehr flächig aufliegen, sondern nur noch bereichsweise.

Eine flächige Auflage der Ringfläche 22 auf der Ringschlulter 14 wird nach einem besonderen Aspekt der Erfindung bei einer Querversetzung des Kopfes 2 relativ zur Achse 24 dann gewährleistet, wenn sowohl die Ringschlulter 14 wie auch die Ringfläche 22 ballig, d.h. gebogen ausgeführt sind, wobei der gemeinsame Krümmungsmittelpunkt 23 der Balligkeit außerhalb des Zugankers und des zweiten Kupplungsorgans 60 liegt. Die Balligkeit entspricht dann einer konkaven Gestaltung der Flächen 14, 22. Bei einer derartigen Ausbildung dieser Flächen bleibt eine flächige Anlage und damit eine Gleichverteilung der Spannkraft auch dann erhalten, wenn der Mittelpunkt der Krafteinwirkung des Kugelgesperres 4, 37 auf den Kopf 2 des Zugankers seitlich versetzt außerhalb der Achse 24 liegen sollte.

Fig. 5 zeigt eine Ausführungsform, bei welcher die Ringschulter 14a des zweiten Kupplungsorgans 60a sowie die Ringfläche 22a des Stopfens 13a schräg nach außen und unten und im übrigen eben gestaltet sind. Im übrigen ist in Fig. 5 das Radialspiel zwischen dem Hals 53a und dem Schaft 6a einerseits und dem zweiten Kupplungsorgan 60a andererseits deutlich zu erkennen. Ferner sieht man auch das Radialspiel zwischen Stopfenkopf 55a und Seitenwand der Aufbohrung 15a. Abweichend von dem oben beschriebenen Ausführungsbeispiel ist weiter der Umstand, daß am Hals 53a ein Innengewinde ausgebildet ist, welches in ein entsprechendes Außengewinde am Ende des Schaftes 6a eingreift.

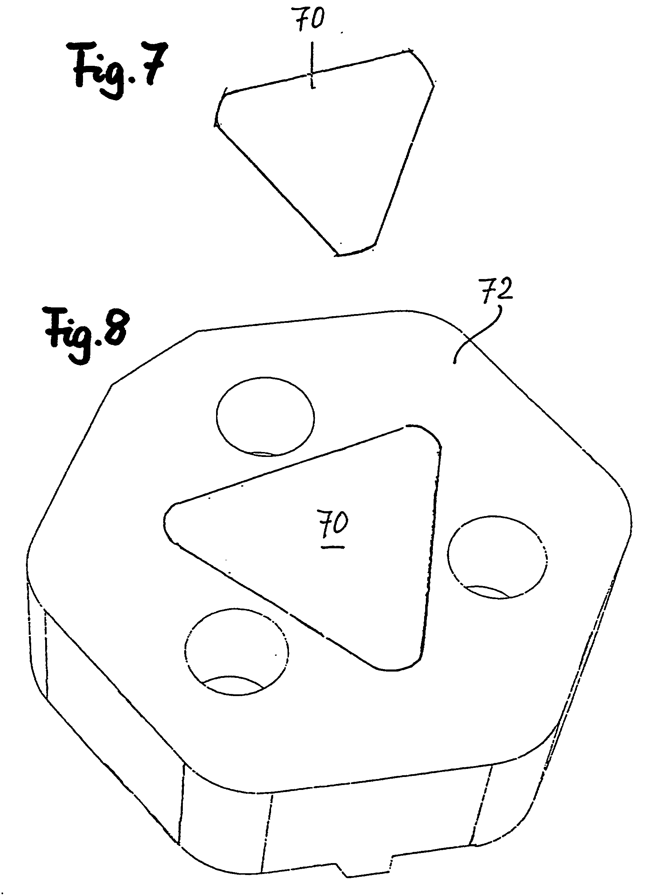

Um die radiale Beweglichkeit des Zugankers 50 unter beim Spannen auftretenden Querkräften zu sichern, ist in Weiterbildung der Erfindung für die Aufbohrung 15 ein Deckel 70 (Fig. 7) vorgesehen, der hier im wesentlichen dreieckige Gestalt hat. Entsprechend weist die Unterseite 72 des zweiten Kupplungsorgans 60 um die Aufbohrung 15 herum eine Einsenkung 74 auf, die in ihrem Profil und in ihrer Tiefe den Abmessungen des Deckels 70 angepaßt ist. Der Deckel 70 kann in die Einsenkung 74 klemmend eingedrückt werden, wobei er dann die Aufbohrung 15 gegen Verunreinigungen abschließt, die beim Ankleben oder Anschweißen von Elektroden an die Unterseite 72 des zweiten Kupplungsorgans 60 anfallen können. Wie aus den Figuren 1, 2 und 5 erkennbar ist, ist der Stopfenkopf 55 bzw. 55a in axialer Richtung kleiner als die entsprechende axiale Abmessung der Aufbohrung 15, 15a. Daher überdeckt der in die Einsenkung 74 eingedrückte Deckel 70 gleichzeitig auch den Stopfen 13, 13a. Wie weiterhin aus Figuren 6 und 8 erkennbar ist, läßt die Einsenkung 74 und damit der Deckel 70 an der Unterfläche 72 des zweiten Kupplungsorgans genügend Platz zur Befestigung der nicht dargestellten Elektrode. Der Deckel 70 kann aus seiner Klemmung in die Einsenkung 74 durch Stoß auf den Zuganker 50 von oben befreit und durch die Hohl-Elektrode nach außen befördert werden.

Handelt es sich um eine Elektrode aus Vollmaterial, wird in diese und den Deckel 70 nach dem Ankleben oder Anschweißen der Elektrode an die freie Unterseite 72 eine zentrale Durchgangsbohrung eingebracht, um das Durchleiten von Spülflüssigkeit zu ermöglichen. Es kommt auch in Betracht, daß der Deckel 70 bereits von vorneherein eine entsprechende zentrale Öffnung aufweist.

## Patentansprüche

1. Kupplungsvorrichtung mit zwei koaxial miteinander zu verbindenden Kupplungsorganen (40; 60) und einem Zuganker (50), dessen Kopf (2) in mit dem ersten Kupplungsorgan (40) verbundene Spannmittel (4, 36, 37) einfügbar und dessen dem Kopf gegenüberliegendes Ende (55) mit dem zweiten Kupplungsorgan (60) koppelbar ist, welches eine axiale Durchgangsbohrung (59) aufweist, **dadurch gekennzeichnet, dass** der Zuganker (50) zum Durchgreifen durch das zweite Kupplungsorgan (60) einen Schaft (6) aufweist, dessen Durchmesser kleiner als der lichte Weite der Durchgangsbohrung (59) ist und dass das Ende um mehr als lichte Weite radial verbreitert ist.

2. Vorrichtung nach Anspruch 1, **dadurch gekennzeichnet, daß** die Durchgangsbohrung (59) unter Ausbildung einer Ringschulter (14) zur Aufnahme des verbreiterten Endes (55) aufgebohrt ist.

3. Vorrichtung nach Anspruch 1 oder 2, **dadurch gekennzeichnet, daß** das verbreiterte Ende als separater Stopfen (13) ausgebildet ist, der mit dem Schaft (6) verbindbar ist.

4. Vorrichtung nach einem der vorstehenden Ansprüche, **dadurch gekennzeichnet, daß** der Zuganker (50) eine den Schaft (6) umgebenden Buchse (9) mit Radialspiel aufweist.

5. Vorrichtung nach einem der vorstehenden Ansprüche, **dadurch gekennzeichnet, daß** das am Zuganker (50) befestigte zweite Kupplungsorgan (60) mit einer Stirnfläche (54) im wesentlichen flächig an einer Unterseite der Buchse (9) anliegt.

6. Vorrichtung nach Anspruch 5, **dadurch gekennzeichnet**, das an der Stirnfläche (54) und der Unterseite jeweils ein sich axial erstreckendes Profil (10) bzw. Gegenprofil ausgebildet ist, was eine drehfeste Anlage des zweiten Kupplungsorgans (60) an der Buchse (9) gewährleistet.

7. Vorrichtung nach einem der vorstehenden Ansprüche, **dadurch gekennzeichnet, daß** die Durchgangsbohrung (59) durch das zweite Kupplungsorgan (60) am freien Ende axial zur Aufnahme eines Stopfenkopfes (55) radial erweitert ist.

8. Vorrichtung nach Anspruch 7, **dadurch gekennzeichnet, daß** die erweiterte Aufbohrung (15) für den Stopfenkopf (55) in Umfangsrichtung unrund ist und daß die Umfangsfläche des Stopfen-Kopfes (55) im Sinne einer im wesentlichen drehfesten Kopplung zwischen Stopfen (13, 13a) und zweitem Kupplungsorgan (60, 60a) der Unrundung der Aufbohrung (15) entspricht.

9. Vorrichtung nach Anspruch 8, **dadurch gekennzeichnet, daß** die Unrundung durch seitliche Abflachungen (56, 57; 66, 67) am Stopfen (13, 13a) und am zweiten Kupplungsorgan (60, 60a) gebildet ist.

10. Vorrichtung nach einem der vorstehenden Ansprüche **dadurch gekennzeichnet, daß** die Ebene der ringförmigen Schulter (14) an der Aufbohrung (15) und die Ebene der an ihr anliegenden Anlagefläche (22) des Stopfens (13) sich quer zur Achse (24) erstrecken.

11. Vorrichtung nach einem der Ansprüche 1 bis 6, **dadurch gekennzeichnet, daß** die ringförmige Schulter (14) an der Aufbohrung (15) und die an ihr anliegende Anlagefläche (22) des Stopfens (13) ballig ausgeführt sind, wobei der Krümmungsmittelpunkt der Balligkeit außerhalb des Zugankers (50) sowie des zweiten Kupplungsorgans (60) auf der Achse (24) liegt.

12. Vorrichtung nach einem der Ansprüche 1 bis 6, **dadurch gekennzeichnet, daß** die im wesentlichen ebene ringförmige Schulter (14a) der Aufbohrung (15) und die im wesentlichen ebene Anlagefläche (22a) des Stopfens (13a) sich nach radial außen und unten erstrecken. (Fig. 5).

13. Vorrichtung nach einem der Ansprüche 3-12, **dadurch gekennzeichnet, dass** das Ende (55) des Schaftes (6) ein Innengewinde aufweist, in welches der mit Außengewinde versehene Hals (53) des Stopfens (13) einschraubbar ist.

14. Vorrichtung nach einem der vorstehenden Ansprüche, **dadurch gekennzeichnet, dass** die Aufbohrung (15) durch einen Deckel (70) verschließbar ist, welcher in die Aufbohrung (15) klemmend eingedrückt werden kann.

## Claims

1. Clutch mechanism with two clutch organs (40; 60) to be linked to each other coaxially and a tie rod (50) whose head (2) may be inserted into clamping means (4, 36, 37) linked to the first clutch organ (40) and whose end (55) opposing the head may be coupled to the second clutch organ (60), which has an axial through bore (59), **characterised in that** the tie rod (50) for passing through the second clutch organ (60) has a shaft (6) whose diameter is smaller than the clear width of the through bore (59) and that the end is radially broadened by more than the clear width.

2. Mechanism according to Claim 1, **characterised in that** the through bore (59) is drilled out forming an annular shoulder (14) for accommodating the broadened end (55).

3. Mechanism according to Claim 1 or 2, **characterised in that** the broadened end is designed as a separate stopper (13) which may be linked to the shaft (6).

4. Mechanism according to one of the previous claims, **characterised in that** the tie rod (50) has a sleeve (9) surrounding the shaft (6) with radial play.

5. Mechanism according to one of the previous claims, **characterised in that** the second clutch organ (60) attached to the tie rod (50) lies with one end face (54) substantially flat against an underside of the sleeve (9).

6. Mechanism according to Claim 5, **characterised in that** an axially extending profile (10) and counter-profile are formed on the end face (54) and the underside, respectively, ensuring twist-free contact of the second clutch organ (60) with the sleeve (9).

7. Mechanism according to one of the previous claims, **characterised in that** the through bore (59) through the second clutch organ (60) is radially extended on the free end axially for accommodating a stopper head (55).

8. Mechanism according to Claim 7, **characterised in that** the extended bore (15) for the stopper head (55) is unround in the circumferential direction and that the circumferential surface of the stopper head (55) corresponds to the unroundness of the bore (15) for the purpose of a substantially twist-free coupling between the stopper (13, 13a) and the second clutch organ (60, 60a).

9. Mechanism according to Claim 8, **characterised in that** the unroundness is formed by lateral flattenings (56, 57; 66, 67) on the stopper (13, 13a) and on the second clutch organ (60, 60a).

10. Mechanism according to one of the previous claims, **characterised in that** the plane of the annular shoulder (14) on the bore (15) and the plane of the contact surface (22) resting against it of the stopper (13) extend transverse to the axis (24).

11. Mechanism according to one of the claims 1 to 6, **characterised in that** the annular shoulder (14) on the bore (15) and the contact surface (22) of the stopper (13) lying against it are designed ball-shaped, whereby the mid-point of the curvature of the ball-shape lies outside the tie rod (50) and the second clutch organ (60) on the axis (24).

12. Mechanism according to one of the claims 1 to 6, **characterised in that** the substantially planar annular shoulder (14a) of the bore (15) and the substantially planar contact surface (22a) of the stopper (13a) extend radially outwards and downwards (Fig. 5).

13. Mechanism according to one of the claims 3-12, **characterised in that** the end (55) of the shaft (6) has an internal thread into which the neck (53) of the stopper (13) provided with an external thread may be screwed.

14. Mechanism according to one of the previous claims, **characterised in that** the bore (15) may be closed with a cover (70) which may be pressed into the bore (15) in locking manner.

## Revendications

1. Dispositif d'embrayage comportant deux organes d'embrayage (40 ; 60) devant être reliés entre eux de façon coaxiale, et un tirant d'ancrage (50) dont la tête (2) peut être introduite dans des moyens de tension (4, 36, 37) reliés au premier organe d'embrayage (40) et dont l'extrémité (55) opposée à la tête peut être accouplée avec le deuxième organe d'embrayage (60) qui présente un orifice traversant axial (59), **caractérisé en ce que** le tirant (50) présente une tige (6) passant à travers le deuxième organe d'embrayage (60), tige dont le diamètre est inférieur au diamètre intérieur de l'orifice traversant (59) et **en ce que** son extrémité est élargie radialement de plus du diamètre intérieur de cet orifice.

2. Dispositif selon la revendication 1, **caractérisé en ce que** l'orifice traversant (59) est élargi en formant un épaulement annulaire (14) pour le logement de l'extrémité élargie (55).

3. Dispositif selon la revendication 1 ou 2, **caractérisé en ce que** l'extrémité élargie est configurée sous la forme d'un bouchon séparé (13) qui peut être relié à la tige (6).

4. Dispositif selon l'une des revendications précédentes, **caractérisé en ce que** le tirant (50) présente une douille (9) entourant la tige (6) avec un jeu radial.

5. Dispositif selon l'une des revendications précédentes, **caractérisé en ce que** le deuxième organe d'embrayage (60) fixé au tirant (50) repose avec une face frontale (54) pour l'essentiel à plat contre une face inférieure de la douille (9).

6. Dispositif selon la revendication 5, **caractérisé en ce qu'**un profil (10) ou un profil inverse s'étendant axialement est respectivement configuré au niveau de la face frontale (54) et de la face inférieure, ce qui garantit un appui non rotatif du deuxième organe d'embrayage (60) contre la douille (9).

7. Dispositif selon l'une des revendications précédentes, **caractérisé en ce que** l'orifice traversant (59) passant à travers le deuxième organe d'embrayage (60) est élargi radialement au niveau de l'extrémité libre de façon axiale pour le logement d'une tête de bouchon (55).

8. Dispositif selon la revendication 7, **caractérisé en ce que** l'alésage (15) agrandi pour la tête de bouchon (55) n'est pas rond en direction périphérique et **en ce que** la surface périphérique de la tête de bouchon (55) correspond à la forme non ronde de l'alésage (15) en vue d'un couplage pour l'essentiel non rotatif entre le bouchon (13, 13a) et le deuxième organe d'embrayage (60, 60a).

9. Dispositif selon la revendication 8, **caractérisé en ce que** la forme non ronde est formée par des aplatissements latéraux (56, 57 ; 66, 67) au niveau du bouchon (13, 13a) et au niveau du deuxième organe d'embrayage (60, 60a).

10. Dispositif selon l'une des revendications précédentes, **caractérisé en ce que** le plan de l'épaulement annulaire (14) au niveau de l'alésage (15) et le plan de la surface d'appui (22) du bouchon s'appuyant contre cet alésage s'étendent transversalement par rapport à l'axe (24).

11. Dispositif selon l'une des revendications 1 à 6, **caractérisé en ce que** l'épaulement annulaire (14) au niveau de l'alésage (15) et la surface d'appui (22) du bouchon (13) reposant contre cet alésage sont configurés sous forme bombée, le point médian de la courbure se trouvant sur l'axe (24), en-dehors du tirant (50) ainsi que du deuxième organe d'embrayage (60).

12. Dispositif selon l'une des revendications 1 à 6, **caractérisé en ce que** l'épaulement annulaire (14a) pour l'essentiel plat de l'alésage (15) et la surface d'appui (22a) pour l'essentiel plate du bouchon (13a) s'étendent radialement vers l'extérieur et vers le bas (figure 5).

13. Dispositif selon l'une des revendications 3 à 12, **caractérisé en ce que** l'extrémité (55) de la tige (6) présente un filetage intérieur dans lequel peur être vissée la gorge (53) du bouchon (13) pourvue d'un filetage extérieur.

14. Dispositif selon l'une des revendications précédentes, **caractérisé en ce que** l'alésage (15) peut être fermé par un couvercle (70) qui peut être emboîté avec serrage dans l'alésage (15).
